# DEMANDE DE BREVET EUROPEEN

(11) **EP 3 537 386 A1**
(43) Date de publication de la demande: **11.09.2019**
(21) Numéro de dépôt: 19160474.3
(22) Date de dépôt: 04.03.2019
(51) Int. Cl.: G07B 15/00, G06Q 10/02, G07F 17/24, G07F 17/42

(54) **SYSTÈME DE DISTRIBUTION DE TITRES DE TRANSPORT ET PROCÉDÉ ASSOCIÉ**

(30) Priorité: 07.03.2018 FR 1851947
(71) Demandeur: Flowbird, 75015 Paris (FR)
(72) Inventeur: KLEIN, Pierre, 25870 DEVECEY (FR)
(74) Mandataire: Lavoix

(57) **Abrégé**

Système (1) de distribution de titres de transport comprenant une borne de paiement (24) disposée en voirie et utilisable pour au moins la vente et la délivrance d'au moins de titres de stationnement associés chacun à un droit de stationnement sur une place de stationnement et un deuxième équipement (3) ;
dans lequel la borne de paiement est adaptée pour fournir, à un utilisateur, une liste de titre(s) de transport sélectionnables, pour détecter une sélection par l'utilisateur d'un titre de transport de la liste, pour mettre en oeuvre le paiement par l'utilisateur du titre de transport sélectionné et pour délivrer audit utilisateur, en réponse audit paiement, un identifiant dudit titre de transport ; et le deuxième équipement est adapté pour solliciter d'un utilisateur la fourniture d'un identifiant de titre de transport, pour recevoir un identifiant fourni par ledit utilisateur et précédemment délivré par un premier équipement, pour déterminer en fonction dudit identifiant reçu, le titre de transport ayant été précédemment sélectionné et payé par l'utilisateur et pour délivrer audit utilisateur ledit titre de transport (4).

## Description

La présente invention concerne le domaine de la distribution des titres de transport.

Aujourd'hui, les utilisateurs de machines automatiques de vente de titres de transport doivent fréquemment faire la queue pour utiliser ces machines, par exemple en fin de mois ou début de mois, ou encore dans certains points de concentration tels que les gares réceptionnant des voyageurs venus d'ailleurs qui doivent impérativement obtenir un titre de transport pour poursuivre leur déplacement.

Ces automates permettent généralement de réaliser les opérations de sélection par un utilisateur d'un titre de transport parmi plusieurs proposés, de paiement par l'utilisateur d'un titre sélectionné et également de fourniture du titre de transport à l'utilisateur. Ils sont souvent très rapides pour la fourniture finale du titre de transport par impression (souvent 10 tickets peuvent être imprimés en moins de 10 secondes) ou par (re)chargement de données digitales sur un support électronique présenté par l'utilisateur ou stocké dans l'automate.

Le but de l'invention est de proposer un système de distribution de titres de transport, qui permette d'améliorer le temps de traitement nécessaire à la fourniture aux utilisateurs des titres de transport.

A cet effet, suivant un premier aspect, l'invention propose un système de distribution de titres de transport caractérisé en ce qu'il comprend :
- un premier ensemble d'équipement(s) comprenant un ou plusieurs premiers équipements parmi lesquels une ou plusieurs borne(s) de paiement disposée(s) en voirie et utilisable(s) pour au moins la vente et la délivrance d'au moins de titres de stationnement associés chacun à un droit de stationnement sur une place de stationnement ; et
- un deuxième ensemble d'équipement(s) comprenant un ou plusieurs deuxième(s) équipement(s) ;
dans lequel chaque premier équipement du premier ensemble d'équipement(s) comprend une première interface homme-machine adaptée pour fournir, à un utilisateur dudit équipement, une liste de titre(s) de transport sélectionnables, pour détecter une sélection par l'utilisateur d'un titre de transport de la liste, pour mettre en oeuvre le paiement par l'utilisateur du titre de transport sélectionné et pour délivrer audit utilisateur, en réponse audit paiement, un identifiant dudit titre de transport ; et

dans lequel chaque deuxième équipement du deuxième ensemble d'équipement(s) comprend une deuxième interface homme-machine adaptée pour solliciter d'un utilisateur la fourniture d'un identifiant de titre de transport, pour recevoir un identifiant fourni par ledit utilisateur et précédemment délivré par un premier équipement, pour déterminer en fonction dudit identifiant reçu, le titre de transport ayant été précédemment sélectionné et payé par l'utilisateur et pour délivrer audit utilisateur ledit titre de transport.

L'invention permet ainsi de diminuer les temps d'attente des voyageurs pour l'obtention de leur titre de transport et de réduire la longueur des files d'attente au niveau des automates de distribution des titres de transport : les flux de voyageurs dans les stations de transport en commun, notamment métro, tramway, bus sont ainsi régulés et optimisés.

Les automates de distribution de titres de transport sont utilisés majoritairement pour les opérations de distribution de titres, les opérations de sélection et de paiement étant réalisées sur des équipements autres et notamment sur des bornes de paiement délivrant des tickets de stationnement.

Dans des modes de réalisation, le système de distribution de titres de transport suivant l'invention comporte en outre une ou plusieurs des caractéristiques suivantes :
- la deuxième interface homme-machine du deuxième équipement est adaptée pour délivrer ledit titre de transport sous une forme parmi un titre de transport imprimé, une carte avec ou sans puce électronique, un rechargement, avec ou sans contact, en données numériques d'un dispositif électronique présentée à l'interface par l'utilisateur ;
- le premier ensemble d'équipements comporte en outre au moins un premier équipement parmi : un téléphone portable, un ordinateur personnel et un automate fixe de sélection et paiement de titres de transport disposé dans une station de transports ;
- un premier équipement est adapté pour délivrer un identifiant comportant au moins un élément parmi un code à barres, un code à barres en deux dimensions, un identifiant indiquant, outre le titre de transport sélectionné, le moment du paiement.

Suivant un deuxième aspect, la présente invention propose une borne de paiement destinée à être disposée en voirie et utilisable pour au moins la vente et la délivrance d'au moins de titres de stationnement associés chacun à un droit de stationnement sur une place de stationnement, ladite borne comprenant une première interface homme-machine adaptée pour fournir, à un utilisateur, une liste de titre(s) de transport sélectionnables, pour détecter une sélection par l'utilisateur d'un titre de transport de la liste, pour mettre en oeuvre le paiement par l'utilisateur du titre de transport sélectionné et pour délivrer audit utilisateur, en réponse audit paiement, un identifiant dudit titre de transport.

Suivant un troisième aspect, la présente invention propose un procédé de distribution de titres de transport dans un système de distribution de titres de transport comprenant :
- un premier ensemble d'équipement(s) comprenant un ou plusieurs premiers équipements parmi lesquels une ou plusieurs borne(s) de paiement disposée(s) en voirie et utilisable(s) pour au moins la vente et la délivrance d'au moins de titres de stationnement associés chacun à un droit de stationnement sur une place de stationnement ; et
- un deuxième ensemble d'équipement(s) comprenant un ou plusieurs deuxième(s) équipement(s) ;
ledit procédé étant caractérisé en ce qu'il comprend les étapes suivantes :
- fourniture par chaque premier équipement du premier ensemble d'équipement(s) à un utilisateur dudit équipement, une liste de titre(s) de transport sélectionnables,
- détection par ledit premier équipement d'une sélection par l'utilisateur d'un titre de transport de la liste,
- mise en oeuvre par le premier équipement du paiement par l'utilisateur du titre de transport sélectionné et délivrance par le premier équipement audit utilisateur, en réponse audit paiement, d'un identifiant dudit titre de transport ;
- demande, par un deuxième équipement du deuxième ensemble d'équipement(s), de la fourniture d'un identifiant de titre de transport,
- réception par le deuxième équipement d'un identifiant fourni par un utilisateur et précédemment délivré par le premier équipement,
- détermination par le deuxième équipement en fonction dudit identifiant reçu, du titre de transport ayant été précédemment sélectionné et payé,
- délivrance par le deuxième équipement audit utilisateur dudit titre de transport.

Ces caractéristiques et avantages de l'invention apparaîtront à la lecture de la description qui va suivre, donnée uniquement à titre d'exemple, et faite en référence aux dessins annexés, sur lesquels :
- la figure 1 représente une vue d'un système de distribution de titres de transport dans un mode de réalisation de l'invention ;
- la figure 2 est une vue d'un organigramme d'étapes mises en oeuvre dans un mode de réalisation de l'invention.

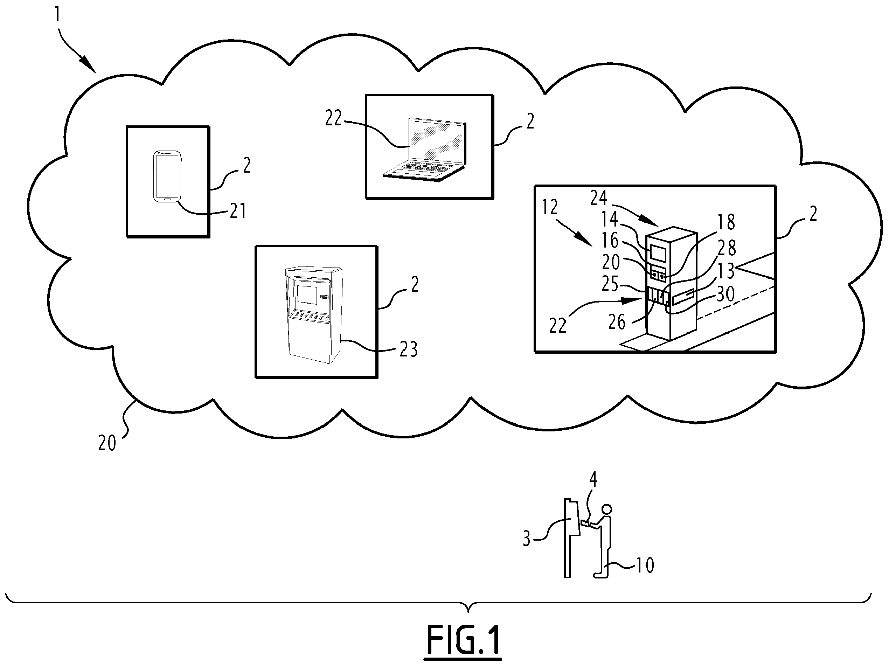

La figure 1 représente une vue schématique d'un système de distribution de titres de transport 1 dans un mode de réalisation de l'invention.

Le système de distribution de titres de transport 1 comprend un premier ensemble 20 d'équipements 2. Ces équipements 2 sont adaptés chacun, via notamment une interface homme-machine dont ils sont dotés :
- pour fournir à un utilisateur dudit équipement une liste de titre(s) de transport sélectionnable(s),
- pour permettre à l'utilisateur de sélectionner sur l'équipement 2 un titre de transport parmi ceux-ci et pour détecter une sélection par l'utilisateur d'un titre de transport de la liste,
- pour mettre en oeuvre le paiement par l'utilisateur du titre de transport sélectionné et
- pour délivrer audit utilisateur, en réponse audit paiement, un identifiant dudit titre de transport.

Un équipement 2 est par exemple, un téléphone portable 21 d'un utilisateur, un ordinateur d'un utilisateur, un automate de sélection 23 de titres de transport disposé en un endroit public tel que gare, station de bus, tramway, métro, une borne de paiement 24 pour la vente et la délivrance d'au moins des titres de stationnement, encore appelé horodateur, etc.

L'invention va être décrite ci-dessous plus spécifiquement par rapport à un équipement 2 de type horodateur 24, mais les fonctions relatives à la présentation, à la sélection et au paiement du titre de transport, ainsi qu'à la fourniture d'un identifiant du titre de transport sont assurées de façon similaires par les autres types d'équipement 2.

Le système d distribution de titres de transport 1 comprend un deuxième ensemble d'équipements de distribution 3, un seul équipement 3 ayant été représenté sur la figure 3. Certains de ces équipements de distribution 3 sont notamment installés dans les gares, les stations de métros, de tramways etc.

L'horodateur 24 est une borne de paiement utilisable, de façon connue, pour la vente et la délivrance d'au moins de titres de stationnement associés chacun à un droit de stationnement sur une place de stationnement jusqu'à une heure limite autorisée par le titre de stationnement.

FR 2 968 814 A1 divulgue un exemple d'un horodateur de stationnement.

Les horodateurs 24 sont libres d'accès, disposées en voirie, et réparties par exemple au sein d'une ville. La « voirie » comprend la chaussée réservée à la circulation des voitures, les places de stationnement réservées au stationnement des véhicules, et les trottoirs et les places piétonnières réservés à la circulation des piétons.

Selon un mode de réalisation de l'invention, l'horodateur 24 contribue en outre à l'obtention d'un titre de transport par l'utilisateur de la manière indiquée ci-après.

Un titre de transport est un document qui permet à un individu de justifier du paiement de son trajet lorsque cet individu emprunte les moyens de transports autorisés par ce titre de transport (par exemple métro, tramway, bus d'une ville) ; le titre de transport peut permettre également, lorsqu'il est valide, de débloquer les barrières empêchant l'accès à ces moyens de transports.

Dans la présente description, un « utilisateur » désigne une personne utilisant un équipement 2, par exemple un horodateur 24, du système 1 de distribution de titres de transport, en vue d'obtenir un tel titre de transport.

Chaque horodateur 24 comprend un premier dispositif d'interface homme-machine 12 permettant à l'utilisateur d'interagir avec l'horodateur 24 en vue notamment d'obtenir un titre de stationnement ou d'obtenir, selon l'invention, un identifiant de titre de transport.

Le premier dispositif d'interface homme-machine 12 comprend par exemple un dispositif d'affichage de données 14, un dispositif de pointage 16 pour la sélection de champs dans une interface graphique utilisateur, un clavier alphanumérique 18 pour la saisie de caractères alphanumériques et/ou un ou plusieurs boutons 20 physiques. Le dispositif d'affichage 14 est par exemple un écran tactile pour permettre de pointer et/ou de saisir des données directement sur l'écran.

Chaque horodateur 24 comprend en outre un bloc de stockage 13, adapté pour mémoriser des éléments de définition de titre de transport ou de droit de stationnement utilisés par l'horodateur 24.

Le premier dispositif d'interface homme-machine 12 est adapté pour extraire du bloc de stockage 13 et afficher sur le dispositif d'affichage de données 14 à destination des utilisateurs, les éléments de droit au stationnement, en vue de la sélection d'une durée de stationnement pour la délivrance d'un titre de stationnement correspondant à la sélection.

Le premier dispositif d'interface homme-machine 12 est en outre adapté pour extraire du bloc de stockage 13 les éléments relatifs aux titres de transport, pour déterminer en fonction de ces éléments, puis pour afficher sur le dispositif d'affichage de données 14 à destination des utilisateurs, une liste des titres de transport sélectionnables et les prix respectifs, en vue de la sélection d'au moins un titre de transport par l'utilisateur.

Chaque horodateur 24 comprend un dispositif de traitement 22 permettant de définir, et délivrer, à un utilisateur un titre de stationnement par l'intermédiaire de l'horodateur 24. Le titre de stationnement 4 indique par exemple à une heure maximum de fin de stationnement et un prix. Le dispositif de traitement 22 est adapté pour déterminer une telle heure maximum de fin de stationnement et ce prix, en fonction des éléments du droit de stationnement mémorisés par le bloc de stockage 13, et par exemple dans le cas considéré, en fonction en outre de l'heure courante, et de la fourniture par l'utilisateur, via le premier dispositif d'interface homme-machine 12, d'une durée de stationnement.

Le dispositif de traitement 22 comprend notamment un microprocesseur et une mémoire stockant des instructions logicielles, qui lorsqu'elles sont exécutées sur le microprocesseur, définissent le fonctionnement du dispositif de traitement 22.

Le dispositif de traitement 22 est en outre adapté pour en fonction d'un ou de plusieurs titres de transport sélectionné(s) par l'utilisateur via le premier dispositif d'interface homme-machine 12 à partir de la liste de titres de transport sélectionnables présentés, déterminer une liste de titres de transport couramment sélectionnés par l'utilisateur et un prix global égal à la somme des prix individuels des titres de transport sélectionnés.

Dans un mode de réalisation, le dispositif de traitement 22 est de surcroît adapté pour, lorsque l'utilisateur a sélectionné un ou des titres de transport et en outre un titre de stationnement, déterminer une liste de titres de transport et de stationnement couramment sélectionnés par l'utilisateur et un prix global égal à la somme des prix individuels des titres de transport et de stationnement sélectionnés.

Le dispositif de traitement 22 est en outre adapté pour permettre le paiement par l'utilisateur du titre de stationnement et/ou des titres de transports ainsi définis : il comprend ainsi par exemple un terminal de paiement électronique 25 configuré pour le paiement par carte, notamment par carte à puce, en particulier par carte privative ou bancaire, un sélecteur de monnaie 26 configuré pour le paiement avec un ou plusieurs pièces de monnaie, un lecteur de billet de banque 28 configuré pour le paiement avec un ou plusieurs billets de banques et/ou un terminal de paiement sans contact 30 configuré pour le paiement avec un dispositif électronique (carte à puce, ordiphone...de l'utilisateur) avec une communication sans contact entre le terminal de paiement sans contact et le dispositif électronique, par exemple par une communication en champs proche (ou NFC pour « *Near Field Communication* » en anglais).

Chaque horodateur 24 comprend un dispositif d'impression 32 adapté pour l'impression d'un ticket de stationnement lorsqu'un titre de stationnement a été acheté et pour l'impression d'un reçu lorsque l'utilisateur a acheté un ou des titres de transport dans des modes de réalisation.

Le dispositif de traitement 22 est en outre adapté pour, en réponse au paiement par l'utilisateur d'un titre de transport, déterminer un identifiant du titre de transport acheté. Puis l'horodateur 24 est adapté pour délivrer à l'utilisateur l'identifiant ainsi déterminé.

L'identifiant a pour fonction de pouvoir permettre ultérieurement à l'équipement de distribution 3 chargé de délivrer le titre de transport sur la base de cet identifiant, de pouvoir déterminer quel titre de transport il doit délivrer et en outre d'attester que l'identifiant provient bien d'un équipement 2 du premier ensemble 20 d'équipements et que le titre de transport a été payé.

L'identifiant est par exemple obtenu par chiffrage à l'aide d'une clé de sécurité partagée entre les équipements 2 et 3 et stockée dans une mémoire de chacun de ces équipements, du résultat de la concaténation d'un numéro identifiant le type de titre de transport acheté, et/ou de la date et de l'heure d'achat et/ou d'un numéro identifiant l'horodateur 24 et/ou de la période de validité du titre de transport, et/ou du nom de l'individu auquel ce ticket est destiné ...

L'identifiant prend par exemple la forme d'une suite de chiffres et/ou de lettres, d'un code à barres en 1 dimension ou 2 dimensions etc.

L'horodateur 24 est adapté pour délivrer l'identifiant par exemple :
- par affichage sur le dispositif d'affichage de données 14 ; et/ou
- par impression par le dispositif d'impression 32 d'un reçu comportant cet identifiant ; et/ou
- par émission d'un message d'un message à destination d'une adresse email ou d'un téléphone de l'utilisateur (l'horodateur 24 est dans ce cas doté d'une interface de télétransmission le connectant à un réseau de télécommunication).
- par « beacon » Bluetooth (https://blog.pandasuite.com/fr/articles/technologie-beacon)

L'équipement de distribution 3 est un automate de distribution de titres de transport. Il comprend, de façon non représentée sur les figures, un deuxième dispositif d'interface homme-machine permettant à l'utilisateur d'interagir avec l'équipement 3 en vue notamment d'obtenir un titre de de transport. Par exemple, ce deuxième dispositif d'interface homme-machine de l'automate de distribution 3 comprend des éléments similaires à ceux du premier dispositif d'interface homme-machine 12 de l'horodateur 24. Il peut en outre comprendre un lecteur de code à barres, lecteur Bluetooth, lecteur de carte bancaire, lecteur de carte sans contact (pour récupérer l'identifiant) ...et une connexion à un serveur distant.

L'équipement 3 comprend en outre un bloc de stockage, adapté pour mémoriser des éléments de définition des titres de transport, notamment ceux permettant d'identifier, en fonction d'un identifiant fourni par un utilisateur et antérieurement délivré par un horodateur 24, quel est le type de titre de transport correspondant à cet identifiant.

Chaque équipement 3 comprend un dispositif de traitement comprenant notamment un microprocesseur et une mémoire stockant des instructions logicielles, qui lorsqu'elles sont exécutées sur le microprocesseur, définissent le fonctionnement du dispositif de traitement. Ce dispositif de traitement de l'équipement 3 est en outre adapté pour, en fonction d'un identifiant d'un titre de transport fourni par l'utilisateur via le deuxième dispositif d'interface homme-machine et en fonction de données mémorisées dans le bloc de stockage (notamment dans des modes de réalisations une clé de déchiffrage), déterminer si cet identifiant correspond bien à un titre de transport acheté auprès d'un équipement 2 et dans le cas positif, à quel titre de transport il correspond.

Chaque équipement 3 comprend un dispositif de distribution qui comprend par exemple :
- un bloc d'impression adapté pour l'impression d'un titre de transport lorsqu'un titre de transport a été acheté ; et/ou
- un bloc de distribution de cartes générant à partir de cartes vierges et en fonction des informations présentes dans l'identifiant et dans le bloc de stockage, un titre de transport valide correspondant au titre de transport acheté de type carte magnétique ou carte à puces ;
- un bloc de rechargement de dispositifs à puce électronique, par exemple de cartes à puces ou de téléphones portables, adapté pour recharger un dispositif à puce électronique présenté par l'utilisateur avec les données correspondant à un titre de transport acheté.

Le dispositif de traitement de l'équipement 3 est adapté pour, lorsqu'il a déterminé qu'un identifiant correspond bien à un titre de transport acheté auprès d'un équipement 2 et qu'il a en outre déterminé à quel titre de transport il correspond (i.e. quelle durée, quel périmètre, quel support parmi papier, carte, rechargement de carte ...), commander le dispositif de distribution correspondant au titre et lui fournir les éléments nécessaires à la distribution du titre acheté.

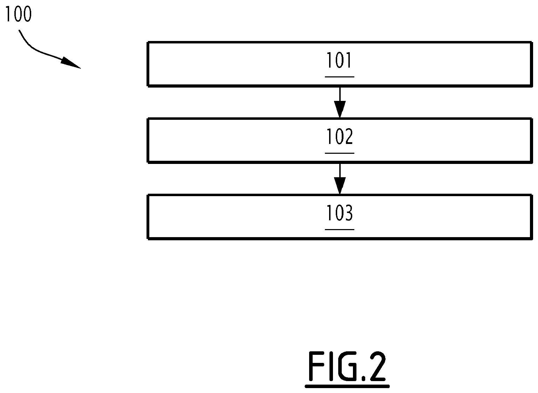

Les étapes d'un procédé de distribution de titres de transport dans un système de distribution de titres de transport 1 sont maintenant décrites dans un mode de réalisation, en référence à la figure 2.

Dans une étape 101, un utilisateur 10 souhaitant procéder à l'achat d'un titre de transport se rend auprès d'un horodateur 24. Il indique, via le premier dispositif d'interface homme-machine 12, qu'il souhaite obtenir la liste des titres de transport. Le dispositif d'interface homme-machine 12 extrait alors du bloc de stockage 13 les éléments relatifs aux titres de transport, détermine, en fonction de ces éléments, le contenu de cette liste, puis affiche les titres de transport sélectionnables et leur prix respectif sur le dispositif d'affichage 14. L'utilisateur 10 sélectionne parmi la liste des titres de transport sur le dispositif d'affichage 14, celui (ou ceux) des titres souhaité(s), à l'aide du dispositif de pointage 16 ou du clavier alphanumérique 18 ou de boutons 20 physiques.

Le dispositif de traitement 22, en fonction du ou des titres de transport sélectionné(s) par l'utilisateur, détecte la liste de titres de transport couramment sélectionnés par l'utilisateur et détermine un prix global égal à la somme des prix individuels des titres de transport sélectionnés.

Dans une étape 102, le premier dispositif d'interface homme-machine 12 proposant plusieurs moyens de paiement, l'utilisateur 10 sélectionne le moyen de paiement souhaité et effectue alors le paiement du ou des titres de transport avec ce moyen de paiement sélectionné.

Le dispositif de traitement 22, en réponse au paiement par l'utilisateur d'un titre de transport, détermine un identifiant du titre de transport acheté et l'horodateur 24 délivre à l'utilisateur l'identifiant ainsi déterminé, par exemple sous forme d'un reçu imprimé indiquant cet identifiant.

Dans une étape 103, l'utilisateur 10 va ensuite obtenir ce titre de transport auprès d'un équipement de distribution 3, appelé ci-après automate de distribution 3, par exemple de la manière indiquée ci-après.

Tout d'abord, l'utilisateur 10 fournit à l'automate 3 l'identifiant précédemment délivré à l'étape 101, par exemple par saisie de l'identifiant via le clavier du deuxième dispositif d'interface homme-machine de l'automate 3, ou mise du code à barres en regard d'un lecteur de code à barres. Le dispositif de traitement de l'automate 3 détermine alors, en fonction de cet identifiant, si cet identifiant correspond bien à un titre de transport acheté auprès d'un équipement 2 et dans le cas positif, à quel titre de transport il correspond. Puis le dispositif de traitement de l'automate 3, lorsqu'il a déterminé que l'identifiant correspond bien à un titre de transport acheté auprès d'un équipement 2 et qu'il a en outre déterminé à quel titre de transport il correspond (i.e. quelle durée, quel périmètre, quel support parmi papier, carte, rechargement de carte ...), commande celui des dispositifs de distribution correspondant au support du titre acheté (par exemple ici, le bloc de rechargement de cartes à puce) et lui fournit les éléments nécessaires à la distribution du titre acheté. Puis, via le deuxième dispositif d'interface homme-machine, l'utilisateur 10 est incité à présenter sa carte à puce de transport 4 sur un support de l'automate, et alors le bloc de rechargement de cartes à puce est adapté pour recharger la carte avec les données correspondant au titre de transport, par liaison NFC (« Near Field Communication » en anglais, « Communication dans un champ proche ») par exemple.

Dans des modes de réalisation, l'horodateur 24 et/ou l'équipement de distribution 3 sont reliés par l'intermédiaire d'un réseau de télécommunication 8 à un serveur informatique. Ils comprennent alors une interface de communication configurée pour mettre en oeuvre des communications avec le serveur informatique par l'intermédiaire du réseau de télécommunication. Le réseau de télécommunication est un réseau de télécommunication avec fil ou sans fil : par exemple un réseau téléphonique filaire, un réseau téléphonique mobile (GSM, UMTS, LTE), un réseau informatique (LAN, WAN), le réseau Internet, un réseau local (WIFI, Bluetooth, NFC) ... Dans un tel cas, les éléments de définition de titre de transport ou de droit de stationnement utilisés par l'horodateur 24 et indiqués ci-dessus comme extraits d'un bloc de stockage 13 sont par exemple délivrés par le serveur.

L'horodateur 24 transmet, dans un mode de réalisation, au serveur chaque nouvel identifiant qu'il a délivré à un utilisateur. Et chaque équipement de distribution 3, lorsqu'il reçoit un identifiant fourni par un utilisateur, effectue une requête auprès du serveur pour vérifier que cet identifiant n'a pas déjà été utilisé par un équipement de distribution pour distribuer un titre de transport, puis si le serveur confirme qu'il n'a pas été utilisé, l'équipement de distribution 3 délivre le titre de transport correspondant à l'utilisateur, puis indique au serveur que le titre correspondant à l'identifiant a été fourni, suite à quoi le serveur enregistre en correspondance avec l'identifiant, que ce dernier a déjà été utilisé.

D'autres types d'identifiants peuvent être utilisés dans des modes de mise en oeuvre de l'invention :
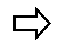 ce peut être un identifiant unique obtenu sur le serveur distant (lorsque l'horodateur est connecté à un serveur distant comme indiqué ci-dessus ;
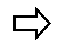 ce peut être un identifiant unique de la carte bancaire de l'utilisateur (ayant servi ou non au paiement) lu sur ce support.
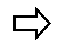 beaucoup de langages de programmation sont en mesure de fournir des identifiants uniques, soit à partir de nombres aléatoires, soit à partir de l'heure du système en microsecondes ou autre unité, soit à partir d'éléments physiques tels que des numéros de série de composants inscrits dans le matériel et consultables par le logiciel, etc. soit par concaténation de plusieurs éléments non uniques, mais dont la combinaison est unique ; dans un tel cas, l'identifiant et des éléments de définition du titre de transport sont fournis par exemple par l'horodateur au serveur distant, qui sera à son tour sollicité par l'automate de distribution pour obtenir ces éléments de définition correspondant à un identifiant qui lui aura été présenté par un utilisateur.

La sélection du titre de transport et la fourniture de l'identifiant ont été décrites ci-dessus comme mises en oeuvre depuis un horodateur. Ces opérations peuvent également, comme déjà indiqué, être mises en oeuvre depuis d'autres types d'équipements 2, par exemple téléphone portable, ordinateur : soit par exécution d'une application précédemment téléchargée depuis Internet par exemple, soit en se connectant via le navigateur Web de l'équipement 2 à un site Internet de délivrance de titres de transport associé au système 1 et offrant ainsi à l'utilisateur de mettre en oeuvre, par pages HTML, en échangeant avec le site, la sélection, le paiement, puis la fourniture de l'identifiant depuis l''interface homme-machine offerte par ces équipements 2. Le paiement a alors lieu par des moyens de paiement en ligne utilisés classiquement sur Internet, par exemple par fourniture des numéros figurant sur la carte de paiement, ou encore via un compte tampon, type « paypal® » etc.

La présente invention permet ainsi de délester nettement la charge de travail supportée par les automates chargés de distribuer les titres de transport puisqu'ils sont principalement dédiés à cet usage, l'ensemble des opérations amont de sélection et paiement pouvant être effectuées en parallèle sur d'autres équipements. L'invention permet donc de disposer de terminaux de distribution simplifiés (dédiés à la distribution uniquement par exemple, ne permettant ni la sélection, ni le paiement) et des terminaux distincts de sélection de produit et de vente, qui eux, ne distribuent pas les titre et qui peuvent être répartis dans les gares notamment comme terminaux "satellites".

On notera que l'invention a été décrite ci-dessus en référence au transport urbains (métro, tramway, bus...), mais l'invention est applicable à tout type de transport, par exemple les transports en chemin de fer, les transports aériens ...

## Revendications

1. Système (1) de distribution de titres de transport **caractérisé en ce qu'**il comprend :
- un premier ensemble d'équipement(s) comprenant un ou plusieurs premiers équipements (2) parmi lesquels une ou plusieurs borne(s) de paiement (24) disposée(s) en voirie et utilisable(s) pour au moins la vente et la délivrance d'au moins de titres de stationnement associés chacun à un droit de stationnement sur une place de stationnement ; et
- un deuxième ensemble d'équipement(s) comprenant un ou plusieurs deuxième(s) équipement(s) (3) ;
dans lequel chaque premier équipement du premier ensemble d'équipement(s) comprend une première interface homme-machine (12) adaptée pour fournir, à un utilisateur dudit équipement, une liste de titre(s) de transport sélectionnables, pour détecter une sélection par l'utilisateur d'un titre de transport de la liste, pour mettre en oeuvre le paiement par l'utilisateur du titre de transport sélectionné et pour délivrer audit utilisateur, en réponse audit paiement, un identifiant dudit titre de transport ; et
dans lequel chaque deuxième équipement du deuxième ensemble d'équipement(s) comprend une deuxième interface homme-machine adaptée pour solliciter d'un utilisateur la fourniture d'un identifiant de titre de transport, pour recevoir un identifiant fourni par ledit utilisateur et précédemment délivré par un premier équipement, pour déterminer en fonction dudit identifiant reçu, le titre de transport ayant été précédemment sélectionné et payé par l'utilisateur et pour délivrer audit utilisateur ledit titre de transport (4).

2. Système (1) de distribution de titres de transport selon la revendication 1, dans lequel la deuxième interface homme-machine du deuxième équipement est adaptée pour délivrer ledit titre de transport (4) sous une forme parmi un titre de transport imprimé, une carte avec ou sans puce électronique, un rechargement, avec ou sans contact, en données numériques d'un dispositif électronique présentée à l'interface par l'utilisateur.

3. Système (1) de distribution de titres de transport selon la revendication 1 ou 2, dans lequel le premier ensemble d'équipements comporte en outre au moins un premier équipement (2) parmi : un téléphone portable (21), un ordinateur personnel (22) et un automate fixe (23) de sélection et paiement de titres de transport disposé dans une station de transports.

4. Système (1) de distribution de titres de transport selon l'une des revendications précédentes, dans lequel un premier équipement (2) est adapté pour délivrer un identifiant comportant au moins un élément parmi un code à barres, un code à barres en deux dimensions, un identifiant indiquant, outre le titre de transport sélectionné, le moment du paiement.

5. Borne de paiement (24), destinée à être disposée en voirie et utilisable pour au moins la vente et la délivrance d'au moins de titres de stationnement associés chacun à un droit de stationnement sur une place de stationnement, ladite borne comprenant une première interface homme-machine (12) adaptée pour fournir, à un utilisateur, une liste de titre(s) de transport sélectionnables, pour détecter une sélection par l'utilisateur d'un titre de transport de la liste, pour mettre en oeuvre le paiement par l'utilisateur du titre de transport sélectionné et pour délivrer audit utilisateur, en réponse audit paiement, un identifiant dudit titre de transport.

6. Borne de paiement (24) selon la revendication 5, adaptée pour délivrer un identifiant comportant au moins un élément parmi un code à barres, un code à barres en deux dimensions, un identifiant indiquant, outre le titre de transport sélectionné, le moment du paiement.

7. Procédé de de distribution de titres de transport dans un système (1) de distribution de titres de transport comprenant :
- un premier ensemble d'équipement(s) comprenant un ou plusieurs premiers équipements (2) parmi lesquels une ou plusieurs borne(s) de paiement (24) disposée(s) en voirie et utilisable(s) pour au moins la vente et la délivrance d'au moins de titres de stationnement associés chacun à un droit de stationnement sur une place de stationnement ; et
- un deuxième ensemble d'équipement(s) comprenant un ou plusieurs deuxième(s) équipement(s) (3) ;
ledit procédé étant **caractérisé en ce qu'**il comprend les étapes suivantes :
- fourniture par chaque premier équipement du premier ensemble d'équipement(s) à un utilisateur dudit équipement, une liste de titre(s) de transport sélectionnables,
- détection par ledit premier équipement d'une sélection par l'utilisateur d'un titre de transport de la liste,
- mise en oeuvre par le premier équipement du paiement par l'utilisateur du titre de transport sélectionné et délivrance par le premier équipement audit utilisateur, en réponse audit paiement, d'un identifiant dudit titre de transport ;
- demande, par un deuxième équipement du deuxième ensemble d'équipement(s), de la fourniture d'un identifiant de titre de transport,
- réception par le deuxième équipement d'un identifiant fourni par un utilisateur et précédemment délivré par le premier équipement,
- détermination par le deuxième équipement en fonction dudit identifiant reçu, du titre de transport ayant été précédemment sélectionné et payé,
- délivrance par le deuxième équipement audit utilisateur dudit titre de transport (4).

8. Procédé de de distribution de titres de transport selon la revendication 7, selon lequel le titre de transport (4) est délivré sous une forme parmi un titre de transport imprimé, une carte avec ou sans puce électronique, un rechargement, avec ou sans contact, en données numériques d'un dispositif électronique présentée à l'interface par l'utilisateur.

9. Procédé de de distribution de titres de transport selon la revendication 7 ou 8, selon lequel le premier ensemble d'équipements comporte en outre au moins un premier équipement (2) parmi : un téléphone portable (21), un ordinateur personnel (22) et un automate fixe (23) de sélection et paiement de titres de transport disposé dans une station de transports

10. Procédé de de distribution de titres de transport, selon l'une des revendications 7 à 9, selon lequel l'identifiant délivré comporte au moins un élément parmi un code à barres, un code à barres en deux dimensions, un identifiant indiquant, outre le titre de transport sélectionné, le moment du paiement.
